# EUROPEAN PATENT APPLICATION

(11) **EP 3 505 940 A1**
(43) Date of publication of application: **03.07.2019**
(21) Application number: 18212959.3
(22) Date of filing: 17.12.2018
(51) Int. Cl.: G01N 35/10

(54) **SAMPLE MEASURING APPARATUS AND SAMPLE MEASURING METHOD**

(30) Priority: 28.12.2017 JP 2017252827
(71) Applicant: SYSMEX CORPORATION, Kobe-shi Hyogo 651-0073 (JP)
(72) Inventor: KATSUMI, Hironori, Hyogo, 651-0073 (JP); WATANABE, Yuji, Hyogo, 651-0073 (JP); SHIBA, Masaki, Hyogo, 651-0073 (JP); FUKUZAKI, Tsuyoshi, Hyogo, 651-0073 (JP)
(74) Representative: Hoffmann Eitle

(57) **Abstract**

A downsized sample measuring apparatus in plan view.

This sample measuring apparatus 100 includes a dispensing unit 20 for integrally holding a first nozzle 21 and a second nozzle 22, a dispensing unit moving unit 30 for moving the dispensing unit 20, a control unit 11 for controlling the dispensing unit 20 and the dispensing unit moving unit 30 so as to dispense a first liquid into a container 131 using the first nozzle 21 and dispense a second liquid into the container 131 using the second nozzle 22, and a measuring unit 10 for measuring a sample that has been processed by dispensing the first liquid and the second liquid.

## Description

### CROSS REFERENCE TO RELATED APPLICATIONS

This application claims priority from prior Japanese Patent Application Publication No. 2017-252827, filed on December 28, 2017, entitled "SAMPLE MEASUREMENT DEVICE AND SAMPLE MEASUREMENT METHOD", the entire contents of which are incorporated herein by reference.

### FIELD OF THE INVENTION

The present invention relates to a sample measuring apparatus and sample measuring method.

### BACKGROUND

Conventionally, sample measuring apparatuses are known (see, for example, Japanese Patent Application Publication No. 2009-063448).

As shown in FIG. 14, the above-mentioned Japanese Patent Application Publication No. 2009-063448 discloses an automatic analyzer (sample measuring apparatus) 900 that includes a measuring unit 901 for measuring a processed sample, a sample nozzle 902 and a reagent nozzle 903 for aspirating liquid, an arm 904 for rotationally moving the nozzle 902 around a rotational axis in parallel with the sample nozzle 902, and an arm 905 for rotating and moving the reagent nozzle 903 around a rotation axis parallel to the reagent nozzle 903. In the automatic analyzer 900 of Japanese Patent Application Publication No. 2009-063448, the arm 904 for rotating the sample nozzle 902 and the arm 905 for rotationally moving the reagent nozzle 903 are attached to a common support part 906.

### SUMMARY OF THE INVENTION

In the automatic analyzer 900 (sample measuring apparatus) described in Patent Document 1, since the sample nozzle 902 and the reagent nozzle 903 are rotated and moved by the arms 904 and 905, respectively, a space is required for the rotation of the arms 904 and 905. Therefore, a problem arises inasmuch as it is difficult to miniaturize the automatic analyzer 900 in plan view (reduce the installation area of the automatic analyzer 900).

The present invention is directed to miniaturizing a sample measuring apparatus in a plan view.

A sample measuring apparatus (100) according to a first aspect of the present invention includes a dispensing unit (20) for integrally holding a first nozzle (21) and a second nozzle (22), a dispensing unit moving unit (30) for moving the dispensing unit (20), a control unit (11) for controlling the dispensing unit (20) and the dispensing unit moving unit (30) so as to dispense a first liquid into a container (131) using the first nozzle (21) and dispense a second liquid into the container (131) using the second nozzle (22), and a measuring unit (10) for measuring a sample that has been processed by dispensing the first liquid and the second liquid.

In the sample measuring apparatus (100) according to the first aspect, since the first nozzle (21) and the second nozzle (22) are integrally moved through the configuration as described above, the movable range of the dispensing unit moving unit (30) can be made smaller than when separately rotating and moving a plurality of nozzles using an arm. This makes it possible to downsize the sample measuring apparatus (100) in plan view by suppressing an increase in the area of the dispensing unit moving unit (30) in a plan view. As a result, it is possible to conserve the installation surface area of the sample measuring apparatus (100). Note that when the first nozzle (21) and the second nozzle (22) are integrally moved, it becomes difficult to perform the dispensing operations in parallel by a plurality of nozzles. However, since there are processes necessary for measurement other than dispensing operation, for example, a next dispensing can be performed while performing a process necessary for a measurement different from the dispensing operation such as the measurement by the measuring unit (10) in parallel with the dispensing operation. In this way it is possible to suppress a reduction of the processing speed. As a result, it is possible to suppress a decrease in the processing speed while reducing the size of the sample measuring apparatus (100).

In the sample measuring apparatus (100) according to the first aspect, it is preferable that the dispensing unit moving unit (30) moves the dispensing unit (20) in the direction in which the first nozzle (21) and the second nozzle (22) are arranged. According to this configuration, the movable range of the first nozzle (21) and the second nozzle (22) can overlap in the moving direction, so that the surface area required for movement in plan view of the first nozzle (21) and the second nozzle (22) can be reduced compared with when the first nozzle (21) and the second nozzle (22) are arranged in a direction crossing the moving direction. In this way it possible to effectively downsize the sample measuring apparatus (100) in plan view.

The sample measuring apparatus (100) according to the first aspect preferably further includes a container transporting unit (140) for transporting the container (131) along the moving direction of the dispensing unit (20). With this configuration, the sample measuring apparatus (100) can be effectively downsized in plan view since the container transporting unit (140) also can be arranged along the moving direction of the dispensing unit(20).

In this case, it is preferable that the container transporting unit (140) has a guide (145) extending in a direction in which the first nozzle (21) and the second nozzle (22) are arranged, and the container (131) is transported in the direction of the arrangement of the first nozzle (21) and the second nozzle (22). In this way the guide (145) of the container transporting unit (140) can be arranged along the moving direction of the dispensing unit (20), so that the sample measuring apparatus (100) can be more effectively reduced in size.

In the sample measuring apparatus (100) according to the first aspect, it is preferable that a sample supply unit (126) to which a sample is supplied as a first liquid, a reagent supply unit (161a, 161b) for supplying a reagent as a second liquid, a cleaning unit (171) for cleaning the nozzles from which the liquid has been suctioned among the first nozzle (21) and the second nozzle (22) with a cleaning liquid each time the liquid is suctioned are also included, and the sample supply unit 126, the cleaning unit 171, and the reagent supply unit (161a, 161b) are linearly arranged in the order of a sample supply unit 126, a cleaning unit 171, a reagent supply unit (161a, 161b) in plan view. According to this configuration, the movable range of the dispensing unit moving unit (30) can be arranged so as to extend linearly, so that it is possible to suppress an increase in the surface area of the moving unit (30) in plan view unlike when the dispensing unit is rotated using an arm. In this way the sample measuring apparatus (100) can be made more compact in plan view.

In this case, it is preferable to also include a spotting unit (180) which holds the container (131) so as to be movable in the vertical direction and spots the sample as the first liquid by the first nozzle (21), and the sample supply unit (126), the cleaning unit (171), the spotting unit (180) are linearly arranged in the order of the sample supply unit (126), the cleaning unit (171), the spotting unit (180), the reagent supply unit (161a, 161b). According to this configuration, the cleaning unit (171) and the spotting unit (180) accessed by both the first nozzle (21) and the second nozzle (22) are disposed near the center in the movable range of the dispensing unit moving unit (30) so that it is possible to efficiently move the first nozzle (21) and the second nozzle (22).

In the sample measuring apparatus (100) according to the first aspect, it is preferable that the first nozzle (21) and the second nozzle (22) dispense different types of liquids. According to this configuration, it is possible to dispense different kinds of liquids necessary for measurement of the sample by the first nozzle (21) and the second nozzle (22).

In the sample measuring apparatus (100) according to the first aspect, it is preferable that the control unit (11) controls the dispensing unit (20) and the dispensing unit moving unit (30) so as to dispense to another container (131) while measurement is performed by the measuring unit (10). According to this configuration, processing of another sample can be performed concurrently with the measurement by the measurement unit (10), so that the process of measuring the sample can be performed efficiently.

The sample measuring apparatus (100) according to the first aspect preferably also includes a heating unit (150) for heating the container (131) in which the liquid is dispensed, and the measuring unit (10) measures the sample heated by the heating unit (150). According to this configuration, it is possible to process other samples by effectively utilizing the time during heating by the heating unit (150).

In this case, it is preferable that while the container (131) into which the liquid has been dispensed is heated by the heating unit (150), the control unit (11) controls the dispensing unit (20) and the dispensing unit moving unit (30) so as to perform the dispensing operation. According to this configuration, it is possible to process other samples in parallel with heating by the heating unit (150), so that the process of measuring the sample can be performed efficiently.

The sample measuring apparatus (100) according to the first aspect preferably also includes a BF separation unit (190) for performing BF separation on the container (131) into which the liquid has been dispensed, and the measuring unit (10) measures the sample subjected to the BF separation process by the BF separation unit (190). According to this configuration, it is possible to process other samples by effectively utilizing the time during separation by the BF separation unit (190).

In this case,it is preferable that while the container (131) into which the liquid has been dispensed is subjected to the BF separation process by the BF separation unit (190), the control unit (11) controls the dispensing unit (20) and the dispensing unit moving unit (30) so as to dispense to another container (131). According to this configuration, since other sample processing can be performed in parallel with the BF separation processing by the BF separation unit (190), the processing of measuring the sample can be performed efficiently.

In the sample measuring apparatus (100) according to the first aspect, it is preferable that the dispensing unit (20) holds the first nozzle (21) at a first side in a predetermined direction and holds the second nozzle (22) at a second side opposite the first side in a predetermined direction, and a reagent storage (160) in which is installed a reagent container (160a) containing reagent to be dispensed by the dispensing unit (20) is provided on the second side in the sample measuring apparatus (100), such that the second nozzle (22) suctions the reagent from the reagent container (160a) installed in the reagent storage (160). According to this configuration, it is possible to reduce the moving distance of the dispensing unit (20) since the reagent is dispensed from the reagent storage (160) disposed on the second side of the sample measuring apparatus (100) by the second nozzle (22) disposed on the second side relative to the first nozzle (21). In this way an increase in the time required for the dispensing process can be suppressed. Since the movable range of the dispensing unit (20) can be reduced, the sample measuring apparatus (100) can be effectively downsized in plan view.

In this case, it is preferable that the reagent storage (160) includes a reagent table (160b) for the user to install the reagents. According to this configuration, even when the user installs the reagent on the reagent table (160b), it is possible to reduce the movement distance of the dispensing unit (20) while suppressing the loss of ease of accessibility by arranging the reagent storage (160) near the end on the second side of the sample measuring apparatus (100).

In the sample measuring apparatus (100) according to the first aspect, it is preferable that the dispensing unit (20) holds the first nozzle (21) at a first side in a predetermined direction and the second nozzle (22) on a second side opposite the first side in a predetermined direction, and also provide a transport unit (125) arranged on the first side of the sample measuring apparatus (100) to transport a sample container (129) containing the sample, such that the first nozzle (21) suctions the sample from the sample container (129) accommodating the sample transported by the transport unit (125). According to this configuration, it is possible to reduce the movement distance of the dispensing unit (20) because a sample is suctioned from the sample container (129) transported to the first side of the sample measuring apparatus (100) by the first nozzle (21) arranged on the first side relative to the second nozzle (22). In this way an increase in the time required for the dispensing process can be suppressed. Since the movable range of the dispensing unit (20) can be reduced, the sample measuring apparatus (100) can be effectively downsized in plan view.

In the sample measuring apparatus (100) according to the first aspect, it is preferable that the dispensing unit moving unit (30) has a common support unit (31) movably supporting the first nozzle (21) and the second nozzle (22). According to this configuration, it is possible to suppress an increase in the number of parts, as compared with a case where members that support the first nozzle (21) and the second nozzle (22) are provided separately.

In this case, the dispensing unit moving unit (30) preferably also includes a moving unit (33) that moves along the supporting unit (31), and the first nozzle (21) and the second nozzle (22) are attached to the common moving unit (33). According to this configuration, it is possible to suppress an increase in the number of parts, as compared with a case where the moving members to which the first nozzle (21) and the second nozzle (22) are attached are separately provided.

In the sample measuring apparatus (100) according to the first aspect, it is preferable that the suction position (P1) of the first nozzle (21), the discharge position (P2) of the first nozzle (21), the suction position (P3) of the second nozzle (22), and the discharge position (P4) of the second nozzle (22) are arranged along the direction in which the first nozzle (21) and the second nozzle (22) are arranged. According to this configuration, suction and discharge can be performed by moving the first nozzle (21) and the second nozzle (22) in a uniaxial direction in which the first nozzle (21) and the second nozzle (22) are arranged.

In the sample measuring apparatus (100) according to the first aspect,the suction position (P1) of the first nozzle (21), the discharge position (P2) of the first nozzle (21), the suction position (P3) of the second nozzle (22), and the discharge position (P4) of the second nozzle (22) preferably are linearly arranged in plan view. According to this configuration, suction and discharge can be performed by linearly moving the first nozzle (21) and the second nozzle (22) in plan view, so that an increase in the movement range of the first nozzle (21) and the second nozzle can be effectively suppressed.

The sample measuring apparatus (100) according to the first aspect preferably also includes a nozzle vertical moving unit (40) for vertically moving the first nozzle (21) and the second nozzle (22) independently of each other. According to this configuration, the first nozzle (21) and the second nozzle (22) can independently suction and discharge a liquid.

In the sample measuring apparatus (100) according to the first aspect, the nozzle that has suctioned the liquid among the first nozzle (21) and the second nozzle (22) is cleaned by the cleaning unit (171) with a cleaning liquid each time a liquid is suctioned. According to this configuration, different liquids can be suctioned without replacing the nozzles since the first nozzle (21) and the second nozzle (22) can be cleaned.

In this case, it is preferable that the control unit (11) controls the cleaning unit (171) so as to discharge the cleaning liquid from the nozzle that has suctioned a liquid after dispensing the liquid suctioned by the nozzle to the container (131). According to this configuration, it is possible to effectively clean the interior of the nozzle with the cleaning liquid.

In the configuration having the cleaning section (171), it is preferable that the cleaning unit (171) is provided in common to the first nozzle (21) and the second nozzle (22). According to this configuration, an increase in the number of parts can be suppressed and an increase of the surface area for installing the cleaning unit (171) can be suppressed as compared with a case where the cleaning unit (171) is separately provided for the first nozzle (21) and the second nozzle (22).

In the configuration having the cleaning unit (171), the cleaning unit (171) is preferably disposed below the dispensing unit moving unit (30). According to this configuration, the nozzles can be cleaned by moving the first nozzle (21) and the second nozzle (22) above the cleaning unit (171) by the dispensing unit moving unit (30).

In the sample measuring apparatus (100) according to the first aspect, the first nozzle (21) preferably is configured to suction the sample, and the second nozzle (22) is configured to suction the reagent. According to this configuration of the sample measuring apparatus (100) that requires suctioning both a sample and a reagent, since the first nozzle (21) for suctioning the sample and the second nozzle (22) for suctioning the reagent can be integrally moved, it is possible to effectively suppress an increase of movement range of the nozzles as compared with the case where the first nozzle (21) for suctioning the sample and the second nozzle (22) for suctioning the reagent are individually moved.

In the sample measuring apparatus (100) according to the first aspect, it is preferable that the nozzle that has performed suction among the first nozzle (21) and the second nozzle (22) discharges the suctioned liquid into the container (131). According to this configuration, it is possible to prepare a sample for detection by the measuring unit (10) by discharging the suctioned liquid to a reaction vessel (131).

In the sample measuring apparatus (100) according to the first aspect, it is preferable that the outer surface of the second nozzle (22) for dispensing the reagent as the second liquid is subjected to a water repellent treatment. According to this configuration, it is possible to prevent the reagent from adhering to the outer surface of the second nozzle (22), so as to prevent the reagent from dripping from the outer surface.

In the sample measuring apparatus (100) according to the first aspect, it is preferable that the first nozzle (21) for dispensing a sample as a first liquid is formed so that its tip portion is inclined. According to this configuration, when the sample is discharged by pressing against the container (131) discharging from the first nozzle (21), a gap can be provided between the inclined tip portion and the pressed portion to suppress clogging of the distal end portion. In this way the sample can be reliably ejected.

A sample measuring method according to a second aspect of the present invention is a method for measuring a sample by moving a dispensing unit (20) integrally holding a first nozzle (21) and a second nozzle (22), using the first nozzle (21) to dispense a first liquid into a container (131),using the second nozzle (22) to dispense a second liquid into the container (131), and measuring the sample processed by dispensing the first liquid and the second liquid.

In the sample measuring method according to the second aspect, since the first nozzle (21) and the second nozzle (22) are integrally moved by configuring as described above, the movable range of the moving unit of the dispensing unit can be reduced compared to when a plurality of nozzles are rotationally moved separately using arms. In this way it is possible to suppress an increase in surface area of the moving unit of the dispensing unit in plan view, so that it is possible to downsize the sample measuring apparatus (100) in a plan view. As a result, it is possible to provide a sample measuring method capable of saving space used for the installation area of the sample measuring apparatus (100).

It is possible to downsize the sample measuring apparatus in plan view.

### BRIEF DESCRIPTION OF THE DRAWINGS

FIG. 1 is a schematic diagram showing a summary of a sample measuring apparatus;
FIG. 2 is a schematic plan view showing a configuration example of a sample measuring apparatus and a blood coagulation measuring apparatus;
FIG. 3 is a plan view showing a structural example of a sample measuring apparatus;
FIG. 4 is a side view showing a dispensing unit moving unit of the sample measuring apparatus;
FIG. 5 is a rear view showing a dispensing unit moving unit of the sample measuring apparatus;
FIG. 6 is a diagram illustrating dispensing of a sample by a pipetting unit of a sample measuring apparatus;
FIG. 7 is a diagram illustrating dispensing of a reagent by a pipetting unit of a sample measuring apparatus;
FIG. 8 is a view showing a cleaning unit of a sample measuring apparatus;
FIG. 9 is a view showing the tip of a first nozzle of a dispensing unit;
FIG. 10 is a view showing the tip of a second nozzle of a dispensing unit;
FIG. 11 is a diagram for describing a spotting process of a sample measuring apparatus;
FIG. 12 is a diagram describing a measuring process of a sample measuring apparatus;
FIG. 13 is a flowchart describing the measuring process shown in FIG. 12;

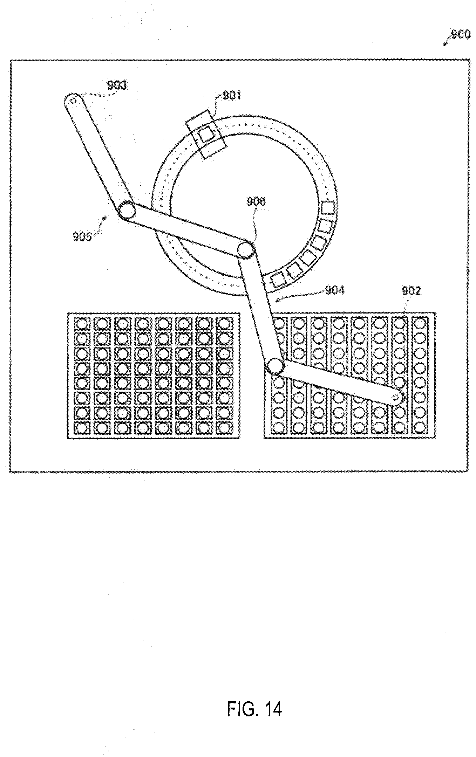

FIG. 14 is a diagram describing the conventional art.

### DESCRIPTION OF THE EMBODIMENTS OF THE INVENTION

Hereinafter, embodiments will be described with reference to the drawings. Overview of Sample Measuring Apparatus

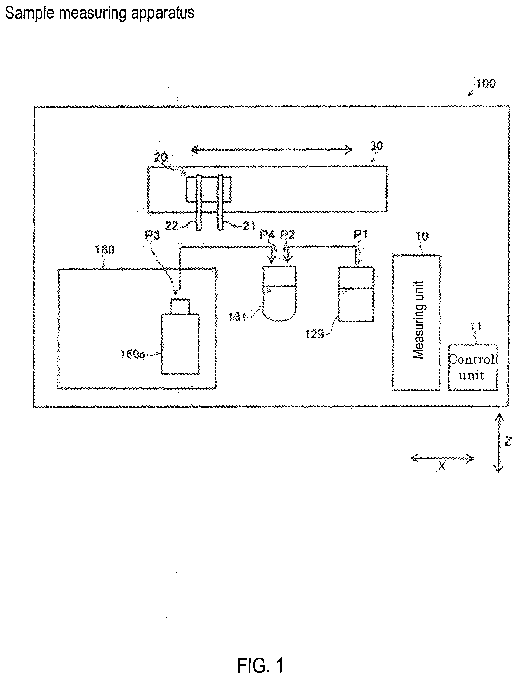

First, a summary of a sample measuring apparatus 100 according to an embodiment will be described with reference to FIG. 1.

The sample measuring apparatus 100 is an apparatus for measuring a sample prepared by adding a predetermined reagent to a specimen collected from a subject.

The subjects are mainly human, but also may be another animal other than human. The sample measuring apparatus 100 performs measurements for clinical examination or medical research of, for example, a specimen taken from a patient. The sample is a living body-derived specimen. A sample derived from a living body is prepared, for example, by subjecting a liquid such as blood (whole blood, serum or plasma), urine, or other body fluid collected from a subject, or other body fluid to a predetermined pretreatment. The sample also may be, for example, a part of tissue of a subject other than a liquid, a cell, or the like. The sample measuring apparatus 100 detects a predetermined target component contained in the sample. The target component may include, for example, predetermined components in the blood or urine specimen, cells and tangible components. The target component may be nucleic acids such as DNA (deoxyribonucleic acid), cells and intracellular substances, antigens or antibodies, proteins, peptides and the like. The sample measuring apparatus 100 may be a blood cell counter, a blood coagulation measuring apparatus, an immunoassay device, a urinary solid component measuring device, or other measuring device. device, a urinary solid component measuring device, or other measuring device.

As an example, the sample measuring apparatus 100 may be an immunoassay device that detects a test substance in a specimen using an antigen-antibody reaction. The immunoassay device detects, for example, antigens or antibodies, proteins, peptides and the like contained in blood as target components. The immunoassay device acquires serum or plasma as a specimen and quantitatively or qualitatively measures antigens or antibodies or the like contained in the specimen. Note that the antigen-antibody reaction includes not only a reaction between an antigen and an antibody but also a reaction using a specific binding substance such as an aptamer. An aptamer is a nucleic acid molecule or peptide synthesized to specifically bind to a specific substance.

The sample measuring apparatus 100 prepares a sample for measurement by adding predetermined one or more kinds of reagents to the sample. The reagent is set in the sample measuring apparatus 100 in a state of being accommodated in a bottle-like reagent container 160a. As shown in FIG. 1, the sample measuring apparatus 100 includes a measuring unit 10, a control unit 11, a dispensing unit 20, and a dispensing unit moving unit 30.

The measuring unit 10 is configured to detect and measure components contained in the sample. Specifically, the measuring unit 10 measures the measurement sample to which the reagent of the reagent container 160a has been added to the sample, and detects the components of the sample. Regardless of the detection method of the target component by the measuring unit 10, a method corresponding to a target component such as a chemical method, an optical method, an electromagnetism method, or the like can be adopted. On the basis of the detection result of the measuring unit 10, for example, the presence or absence of a target component, the number or amount of the target component, the concentration and abundance ratio of a target component and the like are analyzed.

The dispensing unit 20 suctions and discharges the liquid for adjustment of the measurement sample. The dispensing unit 20 includes a first nozzle 21 and a second nozzle 22. The dispensing unit 20 integrally holds the first nozzle 21 and the second nozzle 22. Each of the first nozzle 21 and the second nozzle 22 is configured to suction and discharge liquid. The first nozzle 21 dispenses a first liquid into the container 131. The second nozzle 22 dispenses a second liquid into the container 131. The liquids to be suctioned includes sample and reagent. The first nozzle 21 and the second nozzle 22 dispense mutually different kinds of liquids. For example, the sample is dispensed by the first nozzle 21 and the reagent is dispensed by the second nozzle 22. Specifically, the sample is suctioned by the first nozzle 21 and discharged to the container 131. The second nozzle 22 suctions the reagent and discharges it to the container 131. The measuring unit 10 measures the sample processed by dispensing the first liquid and the second liquid.

The dispensing unit moving unit 30 is configured to move the dispensing unit 20 including the first nozzle 21 and the second nozzle 22 in a horizontal direction. Specifically, the dispensing unit moving unit 30 moves the dispensing unit 20 in the uniaxial direction of the horizontal direction. In the example shown in FIG. 1, the dispensing unit moving unit 30 moves the dispensing unit 20 in the X direction of the horizontal direction. That is, the dispensing unit moving unit 30 moves the dispensing unit 20 in the front-rear direction of the sample measuring apparatus 100.

The suction position PI of the first nozzle 21, the discharge position P2 of the first nozzle 21, the suction position P3 of the second nozzle 22, and the discharge position P4 of the second nozzle 22 are arranged linearly in a plan view. Specifically, the suction position P1 and the discharge position P2 of the first nozzle 21 and the suction position P3 and the discharge position P4 of the second nozzle 22 are linearly arranged along the movement direction of the dispensing unit 20 in plan view. The suction position P1 of the first nozzle 21, the discharge position P2 of the first nozzle 21, the suction position P3 of the second nozzle 22, and the discharge position P4 of the second nozzle 22 arranged along the direction in which the first nozzle 21 and second nozzle 22 are arranged.

The control unit 11 controls the operation of each unit of the sample measuring apparatus 100. The control unit 11 controls the dispensing unit 20 and the dispensing unit moving unit 30 so that the first liquid is dispensed into the container 131 using the first nozzle 21 and the second liquid is dispensed into the container 131 using the second nozzle 22.

Since the first nozzle 21 and the second nozzle 22 are integrally moved in the sample measuring apparatus 100 of the present embodiment described above, the first nozzle 21 and the second nozzle 22 are integrally moved, it is possible to reduce the movable range of the dispensing unit moving unit compared with a case where a plurality of nozzles are rotated and moved separately using arms. In this way an increase in the area of the dispensing unit moving unit 30 in plan view can be suppressed, so that it is possible to downsize the sample measuring apparatus 100 in a plan view. As a result, it is possible to conserve the installation space of the sample measuring apparatus 100 in a space-saving manner. Note that when the first nozzle 21 and the second nozzle 22 are integrally moved, it becomes difficult to perform the dispensing operation in parallel by a plurality of nozzles. However, since there is a process necessary for the measurement other than the dispensing operation in the measurement of the sample, for example,the next dispensing operation can be performed in parallel with the dispensing operation while performing a process necessary for a measurement that is different from the dispensing operation such as the measurement by the measuring unit 10. In this way it is possible to suppress a reduction of the processing speed. As a result, it is possible to suppress a reduction of the processing speed while downsizing the sample measuring apparatus 100.

A dispensing unit moving unit 30 is provided for moving the dispensing unit 20 in a uniaxial direction in the horizontal direction. In this way, since it is only necessary to move the dispensing unit 20 including the first nozzle 21 and the second nozzle 22 only in a uniaxial direction, the movable range of the dispensing unit moving unit 30 can be arranged to extend only in a uniaxial direction. In this way, unlike the case where the dispensing unit is rotated using an arm, it is possible to suppress an increase in the area of the dispensing unit moving unit 30 in the plan view, so as to reduce the size of the sample measuring apparatus 100. As a result, it is possible to conserve the installation space of the sample measuring apparatus 100 in a space-saving manner.

Since suction and discharge can be performed by moving the first nozzle 21 and the second nozzle 22 linearly, it is possible to effectively suppress an increase of the moving range of the first nozzle 21 and the second nozzle 22.

### Specific Configuration Example of Sample Measuring Apparatus

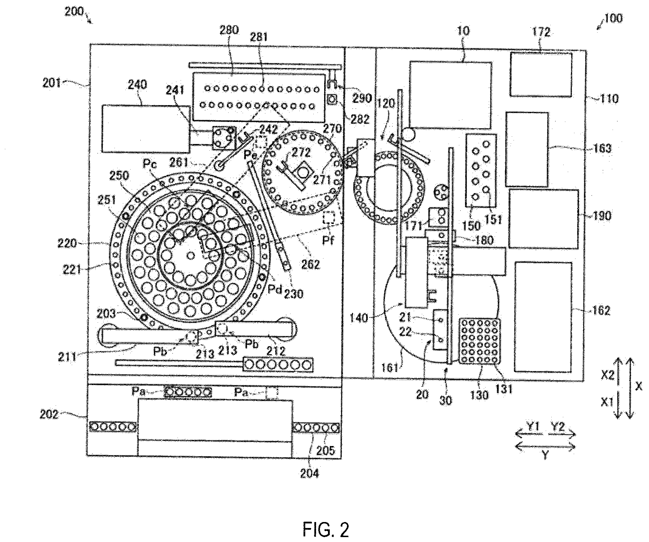

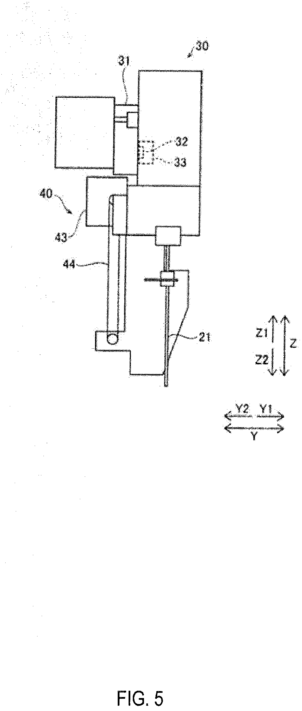

Next, a specific structural example of the sample measuring apparatus 100 will be described in detail with reference to FIGS. 2 to 13. In the examples of FIGS. 2 to 13, the sample measuring apparatus 100 is an immunoassay device that detects a target substance in a sample using an antigen-antibody reaction. In the examples of FIGS. 2 to 13, the sample measuring apparatus 100 is connected to a blood coagulation measuring apparatus 200. The sample measuring apparatus 100 also may be used alone without being connected to the blood coagulation measuring apparatus 200.

### Configuration of Blood Coagulation Measuring Apparatus

In the configuration example of FIG. 2, the blood coagulation measuring apparatus 200 includes a measuring unit 201 and a transport unit 202.

In the configuration example of FIG. 2, the blood coagulation measuring apparatus 200 has the functions of suctioning a sample from a sample container accommodating a sample, and dispensing the sample into the container 203 in a fixed quantity.

A sample rack 204 is installed in the transport unit 202. A plurality of sample containers 205 containing samples can be set in the sample rack 204. The transport unit 202 transports the sample rack 204 installed by the user, and positions each sample container 205 at a predetermined sample suction position Pa in plan view. A label (not shown) on which identification information is recorded in a barcode or the like is affixed to the sample rack 204 and the sample container 205. Identification information of the sample rack 204 and the sample container 205 is read out by a reader installed in the course of the transport path. The sample in the sample container 205 and the measurement result of the sample are associated and managed according to the identification information. The sample container 205 is, for example, a blood collection tube.

The measuring unit 201 includes sample dispensing units 211 and 212 for suctioning a sample in the sample container 205, and dispensing the sample to the container 203 in a fixed amount.

The sample dispensing units 211 and 212 are configured by dispensing arms that hold a pipette 213 for dispensing samples so as to be revolvable. The pipette 213 is connected to a pump (not shown), so that the sample can be quantitatively suctioned and discharged. The sample dispensing units 211 and 212 can respectively move a pipette 213 to suction a predetermined amount of sample from the sample container 205 at the sample suction position Pa. The sample dispensing units 211 and 212 respectively move the pipette 213, and can discharge a suctioned sample into the container 203 arranged at a predetermined sample dispensing position Pb. The container 203 is, for example, a cuvette.

The measuring unit 201 performs optical measurement on a measurement sample prepared by adding a predetermined reagent to a sample suctioned by the sample dispensing unit 211 or 212. The blood coagulation measuring apparatus 200 also may be configured without the inclusion of the transport unit 202 and the sample dispensing units 211 and 212, to perform a measurement on a container 203 into which a sample has been quantitatively dispensed in advance.

The measuring unit 201 includes a mechanism for transferring, to each unit, the container 203 containing the sample and the reagent for preparing the measurement sample. In the structural example of FIG. 2, the measurement unit 201 includes a container table 220. The container table 220 has an annular shape in plan view and can rotate in the circumferential direction. The container table 220 includes a plurality of holding holes 221 arranged along the circumferential direction. One container 203 can be installed in each of the holding holes 221. The sample dispensing units 211 and 212 can dispense suctioned sample to a new container 203 held in the container table 220 at the sample dispensing position Pb in plan view. The sample dispensing units 211 and 212 also can suction the sample from the container 203 containing the sample on the container table 220.

The measuring unit 201 includes a transfer unit 230 that positions the new container 203 at the sample dispensing position Pb. The transfer unit 230 can move the setting base having the holding hole for installing the container 203 along a rail. For example, two holding holes are provided. The sample dispensing unit 212 can dispense the suctioned sample to the new container 203 held by the transfer unit 230.

Many new containers 203 are stored in a container storage unit 240, and taken out one by one from the container storage unit 240 by the container supply unit 241. The container 203 taken out by the container supply unit 241 is gripped and removed by a gripping mechanism 242. The gripping mechanism 242 can place the removed container 203 in the holding hole 221 of the container table 220 or the holding hole of the transfer unit 230.

In the structural example of FIG. 2, the blood coagulation measuring apparatus 200 has a function of adding a reagent to a sample in a container 203 to prepare a measurement sample. The measurement sample is a mixed solution of the sample and the reagent.

The measuring unit 201 includes a reagent table 250 for storing the reagent container 251 used for measurement, and reagent dispensing units 261 and 262 for suctioning and discharging the reagent from the reagent container 251 installed in the reagent table 250.

The reagent table 250 is disposed inside the container table 220 and has a circular shape in a plan view. A plurality of reagent containers 251 can be installed along the circumferential direction in the reagent table 250. The reagent table 250 is rotatable in the circumferential direction and can rotate an optional reagent container 251 to the reagent suction positions Pc and Pd in a predetermined plan view.

The reagent dispensing units 261 and 262 are provided with pipettes (not shown) for pipetting reagents. The pipette is connected to a pump (not shown), and can perform quantitative suction and discharge of the reagent. The reagent dispensing units 261 and 262 can respectively suction a predetermined amount of reagent from the reagent container 251 positioned at predetermined reagent suction positions Pc and Pd on the reagent table 250. Each of the reagent dispensing units 261 and 262 can move the pipette to the reagent dispensing positions Pe and Pf in plan view, and discharge a predetermined amount of reagent to the container 203 at the reagent dispensing position.

The measuring unit 201 includes a heating table 270 for holding and heating the container 203 to which the sample has been dispensed. The heating table 270 includes a plurality of holding holes 271 for respectively holding a plurality of containers 203 containing a sample, and a gripping mechanism 272 for gripping and transferring the container 203. The heating table 270 incorporates a heater (not shown) for heating the containers 203 respectively held in the plurality of holding holes 271.

The heating table 270 has a circular shape in plan view, and a plurality of holding holes 271 are arranged along the circumferential direction. The heating table 270 is rotatable in the circumferential direction and it is possible to transfer the container 203 installed in the plurality of holding holes 271 in the circumferential direction by rotation while heating to a predetermined temperature by the heater. The gripping mechanism 272 grips and transfers the container 203, installs the container 203 in the holding hole 271, and can retrieve the container 203 from the holding hole 271.

The gripping mechanism 272 can transfer the container 203 installed in the transfer unit 230 to the holding hole 271 of the heating table 270. The gripping mechanism 272 also can remove the heated container 203 in the holding hole 271 of the heating table 270 and transfer the heated container 203 to the reagent dispensing positions Pe and Pf, respectively. The gripping mechanism 272 returns the container 203 into which the reagent has been dispensed by the reagent dispensing unit 261 or 262 to the holding hole 271 of the heating table 270.

The blood coagulation measuring apparatus 200 also may be configured without the reagent table 250, the reagent dispensing unit 261 and the heating table 270, so as to measure a container 203 in which the prepared measurement sample is stored in advance.

The measurement unit 201 includes a detection unit 280 for performing optical measurement on the measurement sample in the container 203. The detection unit 280 includes a container setting unit 281 for installing the container 203 containing the sample, and a light receiving unit provided corresponding to the container setting unit 281.

In the structural example of FIG. 2, the detection unit 280 includes a plurality of container setting units 281. The detection unit 280 linearly extends along one side of the blood coagulation measuring apparatus 200 in plan view, and a plurality of container setting units 281 are arranged in a straight line in two rows at a predetermined interval.

The measuring unit 201 includes a gripping mechanism 290 for transferring the container 203 to the detection unit 280.

The gripping mechanism 290 includes a moving mechanism (not shown) in each of the X, Y, and Z directions, which are orthogonal three axis directions, and can grip and transfer the container 203. The gripping mechanism 290 removes the container 203 from the holding hole 271 of the heating table 270, and transfers the container 203 to the reagent dispensing position Pe, and after the dispensing of the reagent places the container 203 in the container setting unit 281 of the detection unit 280. Note that the gripping mechanism 290 can remove the measured container 203 from the container setting unit 281 and transfer the measured container to the disposal port 282.

Optical measurement is performed on the measurement sample in the container 203 installed in the container setting unit 281 of the detection unit 280. A light irradiating unit irradiates light for measurement on the container 203 placed in the container setting unit 281 of the detection unit 280. The light receiving unit receives transmitted light or scattered light of the light irradiated on the container 203, and outputs an electric signal corresponding to the amount of received light. The sample is measured based on the output electric signal.

The blood coagulation measuring apparatus 200 also can deliver the sample to the sample measuring apparatus 100. Specifically, the blood coagulation measuring apparatus 200 transports the sample container 129 to the sample measuring apparatus 100 via the container table 220 and the heating table 270. The sample container 129 is, for example, a cuvette.

### Structure of Sample Measuring Apparatus

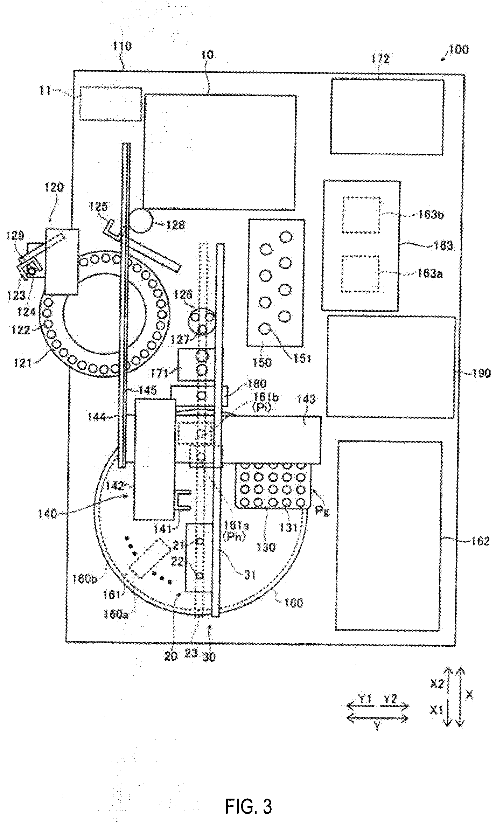

As shown in FIG. 3, the sample measuring apparatus 100 includes a measuring unit 10, a control unit 11, a dispensing unit 20, a dispensing unit moving unit 30, a nozzle vertical moving unit 40, a housing 110, a sample transport unit 120, a reaction container supply unit 130, a container transport unit 140, a heating unit 150, a reagent container holding unit 161, a reagent cooling unit 162, a reagent dispensing unit 163, a cleaning unit 170, a spotting 180, and a BF separation unit 190.

The housing 110 has a box-like shape capable of accommodating each part of the sample measuring apparatus 100 therein. The housing 110 also may be configured to accommodate each part of the sample measuring apparatus 100 on a single level or may have a hierarchical structure in which a plurality of levels are provided in the vertical direction and each part of the sample measuring apparatus 100 is allocated to respective levels.

The sample transport unit 120 is configured to transport the sample collected from a subject to a position to suction the sample. The sample transport section 120 includes a transfer table 121, a transfer catcher 123, a transfer port 124, a transport unit 125, and a sample supply unit 126. The sample transport unit 120 receives the sample from the blood coagulation measuring apparatus 200 and transports the received sample to the sample supply unit 126. The sample transport unit 120 also transports the sample container 129 that has been suctioned to the disposal port 128 for disposal.

The transfer table 121 has an annular shape in plan view and is rotatable in the circumferential direction. The transfer table 121 is provided with a plurality of holding holes 122 arranged along the circumferential direction. Sample containers 129 can be respectively installed in the holding holes 122 one by one. The transfer catcher 123 conveys the sample container 129 placed at the transfer port 124 to the holding hole 122 of the transfer table 121. The transfer catcher 123 is rotatable around a rotational axis in the vertical direction and is vertically movable in vertical directions. The transfer port 124 can place the sample container 129 transported from the blood coagulation measuring apparatus 200.

The transport unit 125 transports the sample container 129 held in the holding hole 122 of the transfer table 121 to the holding hole 127 of the sample supply unit 126. The transport unit 125 is disposed on the X2 direction side in the sample measuring apparatus 100, and transports the sample container 129 containing the sample. The transport unit 125 also transports the sample container 129 held in the holding hole 127 of the sample supply unit 126 to the disposal port 128. The transport unit 125 also transports the container 131 used for the reaction to the measuring unit 10. The transport unit 125 transports the container 131 from the measurement unit 10 to the disposal port 128. The transport unit 125 is rotatable around a rotational axis in the vertical direction and is vertically movable in vertical directions. The transport unit 125 includes, for example, a catcher for holding the sample container 129. The container 131 is, for example, a cuvette.

The sample supply unit 126 has a circular shape in plan view and is rotatable in the circumferential direction. The sample supply unit 126 is provided with a plurality (three) of holding holes 127 arranged along the circumferential direction. One sample container 129 can be installed in each of the holding holes 127. The three holding holes 127 have mutually different depths. That is, the three holding holes 127 correspond to containers of different heights, respectively.

The reaction container supply unit 130 stores a plurality of containers 131. The reaction container supply unit 130 can supply the containers 131 one by one to the container transport unit 140 at a predetermined reaction container supply position Pg in plan view. The reaction container supply unit 130 also is movable in the front-rear direction (X direction). That is, when the reaction container supply unit 130 is positioned forward (in the X1 direction side), the container 131 is supplied by the user. The container 131 also is supplied to the sample measuring apparatus 100 in a state where it has been moved to the X2 direction side. Note that supplying the containers 131 may be performed one by one or a plurality of them may be supplied collectively by a rack or the like. The movement of the reaction container supply unit 130 in the forward and rearward directions may be performed manually by the user, or may be automatically performed by a driving unit or the like.

The container transport unit 140 transports the container 131. More specifically, the container transport unit 140 transports the container 131 along the movement direction of the dispensing unit 20. The container conveyance unit 140 also acquires the container 131 from the reaction container supply position Pg, and places the container 131 at the processing position of each unit including the heating unit 150, the reagent dispensing unit 163, the spotting unit 180, the BF separation unit 190 and the like. The container transport unit 140 includes a catcher 141, a support member 142, a support member 143, and a support member 144.

The catcher 141 grips the container 131. The catcher 141 also can shake the container 131 while gripping the container 131. The support member 142 supports the catcher 141 movably in a vertical direction (Z direction). The support member 143 supports the support member 142 movably in a lateral direction (Y direction). The support member 144 supports the support member 143 movably in the front-rear direction (X direction). The support member 144 is provided with a guide 145 extending in the X direction. That is, the guide 145 is disposed so as to extend in the direction in which the first nozzle 21 and the second nozzle 22 are arranged. In this way the container transport unit 140 can transport the container 131 in the direction in which the first nozzle 21 and the second nozzle 22 are arranged. The catcher 141 also can move in horizontal directions (XY direction) and can move in vertical directions (Z direction).

The heating unit 150 includes a heater and a temperature sensor, and holds and heats the container 131 to heat and react the sample contained in the container 131. The heating unit 150 heats the container 131 in which the liquid is dispensed. The heating unit 150 is provided with a plurality of holding holes 151. Ae container 131 can be respectively installed in each holding hole 151. The sample and the reagent contained in the container 131 react by the heat of the heating unit 150. One or a plurality of heating units 150 are provided in the housing 110. The heating unit 150 may be fixedly installed in the housing 110 or may be provided movably in the housing 110. When the heating unit 150 is configured to be movable, the heating unit 150 also may function as a part of the container transport unit.

The reagent container holding unit 161 can hold a plurality of reagent containers 160a. The reagent container holding unit 161 is provided in a reagent storage 160 having a cylindrical shape. The reagent storage 160 is arranged on the X1 direction side in the sample measuring apparatus 100. A reagent container 160a accommodating a reagent dispensed by the dispensing unit 20 is installed in the reagent storage 160. The reagent storage 160 includes a reagent table 160b for the user to install the reagent. The reagent container holding unit 161 is provided on the forward side (the X1 direction side). The reagent container holding unit 161 has a circular shape in plan view. A plurality of reagent containers 160a can be installed along the circumferential direction in the reagent container holding unit 161. The reagent container holding unit 161 is rotatable in the circumferential direction, and can rotate an optional reagent container 160a to a predetermined reagent suction position Ph or Pi in plan view. A cooling mechanism also is provided in the reagent container holding unit 161, and the reagent in the reagent container installed in the reagent container holding unit 161 is kept at a constant temperature suitable for storage. For example, an R1 reagent, an R2 reagent, and an R3 reagent may be held in the reagent container holding unit 161. A reagent supply unit 161a that supplies the R1 reagent and the R2 reagent is provided above the reagent container holding unit 161 at the reagent suction position Ph. The reagent supply unit 161a is provided with an openable and closable lid. The lid of the reagent supply unit 161a is opened at the time of reagent suction, and is closed at other times. A reagent supply unit 161b for supplying an R3 reagent is provided above the reagent container holding section 161 at the reagent suction position Pi. The reagent supply unit 161b is provided with an openable and closable lid. The lid of the reagent supply unit 161b is opened at the time of reagent suction, and is closed at other times. The reagent container holding portion 161 also is arranged below the dispensing unit moving unit 30.

The reagent table 160b has a circular shape in plan view. A plurality of reagent containers 160 a can be installed along the circumferential direction in the reagent table 160b. The reagent table 160b is rotatable in the circumferential direction, and any reagent container 160a can be positioned at the reagent suction position Ph or Pi by rotation.

The reagent cooling unit 162 cools the R4 reagent and the R5 reagent. The reagent cooling unit 162 keeps the R4 reagent and the R5 reagent at a constant temperature suitable for storage. The reagent dispensing unit 163 dispenses the R4 reagent and the R5 reagent to the container 131. The reagent dispensing unit 163 includes an R4 reagent dispensing unit 163a and an R5 reagent dispensing unit 163b. The R4 reagent dispensing unit 163a dispenses the R4 reagent to the container 131 transferred by the container transport unit 140 after the R4 reagent is supplied from the reagent cooling unit 162. The R5 reagent dispensing unit 163b dispenses the R5 reagent to the container 131 transferred by the container transport unit 140 after the R5 reagent is supplied from the reagent cooling unit 162. The R4 reagent dispensing unit 163a and the R5 reagent dispensing unit 163b are cleaned using a cleaning liquid each time a dispensing operation is performed.

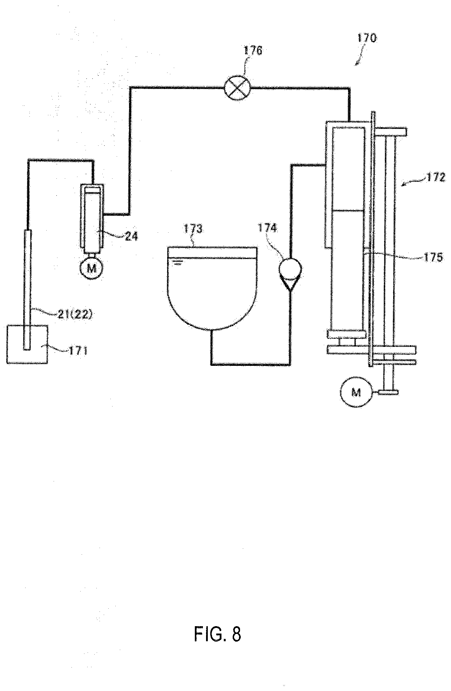

The cleaning unit 170 cleans the first nozzle 21 and the second nozzle 22 using a cleaning liquid. Specifically, the cleaning unit 170 includes a washing unit 171, a high pressure unit 172, washing liquid container 173 (refer to FIG. 8), back flow preventer valve 174 (refer to FIG. 8), high pressure wash syringe 175 (refer to FIG. 8), and solenoid valve 176 (refer to FIG. 8). The cleaning unit 171 cleans the nozzle which has suctioned liquid, from among the first nozzle 21 and the second nozzle 22, with the cleaning liquid each time a liquid is suctioned. In this way different liquids can be suctioned without replacing the nozzles since the first nozzle 21 and the second nozzle 22 can be cleaned. The cleaning unit 171 also sequentially cleans the first nozzle 21 and the second nozzle 22 in the initial operation and the end operation of the sample measuring apparatus 100.

The cleaning unit 171 discharges the cleaning liquid from the inside of the nozzle and also cleans the nozzle with the cleaning liquid from the outside of the nozzle. After dispensing the liquid suctioned by the nozzle into the container 131, the cleaning liquid is discharged from the nozzle that has suctioned the liquid. In this way the inside of the nozzle can be effectively cleaned with the cleaning liquid.

The cleaning unit 171 is provided in common to the first nozzle 21 and the second nozzle 22. In this way it is possible to suppress an increase in the number of parts as compared to when a cleaning unit 171 is separately provided for the first nozzle 21 and the second nozzle 22, and to suppress an increase in the installation area of the cleaning unit 171. The cleaning unit 171 also is disposed below the dispensing unit moving unit 30. In this way the first nozzle 21 and the second nozzle 22 can be moved above the cleaning unit 171 by the dispensing unit moving unit 30, and the nozzles can be cleaned. The second nozzle 22 also dispenses the R2 reagent and the R3 reagent above the cleaning unit 171. In this way it is possible to quickly clean the second nozzle 22 in the cleaning unit 171 after dispensing by the second nozzle 22.

The spotting unit 180 can hold the container 131 so as to be movable in vertical directions (Z direction). In the spotting unit 180, the sample is dispensed into the container 131 by spotting. In the spotting unit 180, the R1 reagent is dispensed. The spotting unit 180 has an elastic material that deforms in the vertical direction. The elastic material includes, for example, a leaf spring or a coil spring. Details of the spotting operation will be described later.

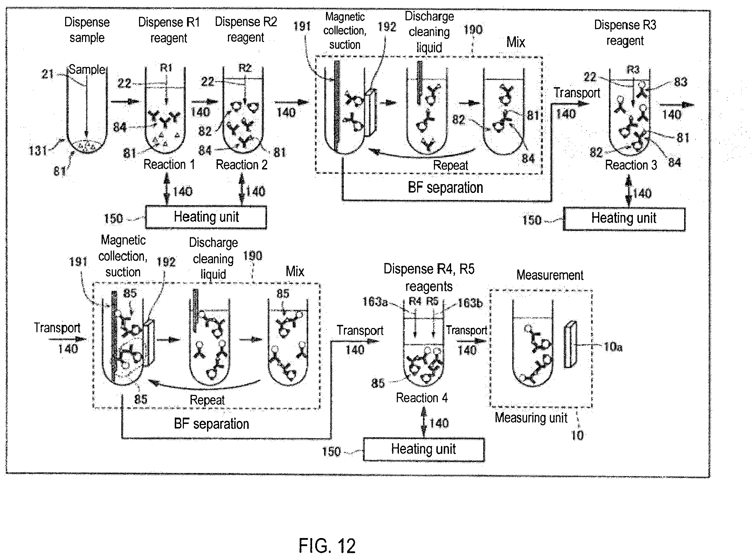

The BF separation unit 190 has a function of executing a BF separation process for separating a liquid phase and a solid phase from the container 131. The BF separation unit 190 performs BF separation on the container 131 into which the liquid has been dispensed. The BF separation unit 190 includes one or more processing ports capable of accepting the containers 131. A magnetic force source 192 (refer to FIG. 12) for magnetically collecting the magnetic particles contained in the R2 reagent, and a cleaning unit 191 (refer to FIG. 12) for suctioning the liquid phase and supplying the cleaning liquid are provided at the processing port. The BF separation unit 190 suctions the liquid phase in the container 131 by the cleaning unit 191, and supplies the cleaning liquid in a state where the magnetic particles on which the immunocomplex is formed, which will be described later, are collected. The cleaning unit 191 includes a liquid phase suction passage and a cleaning liquid discharge passage, and is connected to a fluid circuit (not shown). In this way unnecessary components contained in the liquid phase can be separated and removed from the conjugate of the immunocomplex and magnetic particles.

The measuring unit 10 includes a photodetector 10a (see FIG. 12) such as a photomultiplier tube. The measuring unit 10 measures the amount of antigen contained in the sample by acquiring the light generated in the reaction process between the labeled antibody that binds to the antigen of the sample subjected to various treatments and the luminescent substrate with the photodetector 10a. The measuring unit 10 measures the sample heated by the heating unit 150. The measuring unit 10 also measures the sample subjected to the BF separation process by the BF separation unit 190.

The control unit 11 includes a processor such as a CPU, and a storage unit such as a ROM, a RAM, and a hard disk. The processor functions as a control unit of the sample measuring apparatus 100 by executing the control program stored in the storage unit. The control unit 11 controls the operation of each unit of the above-described sample measuring apparatus 100. The control unit 11 also analyzes the result detected by the measuring unit 10.

The dispensing unit 20 includes a first nozzle 21 and a second nozzle 22. The first nozzle 21 is configured to suction and discharge the sample. The second nozzle 22 is configured to suction and discharge the reagent. The second nozzle 22 is configured to suction and discharge a plurality of kinds of reagents. Specifically, the second nozzle 22 is configured to suction and discharge the R1 reagent, the R2 reagent, and the R3 reagent.

The dispensing unit 20 holds the first nozzle 21 on a first side (the X2 direction side) in the X direction, and holds the second nozzle 22 on a second side (the X1 direction side) opposite to the first side in the X direction. The first nozzle 21 suctions the sample from the sample container 129 that accommodates the sample transported by the transport unit 125. The second nozzle 22 suctions the reagent from the reagent container 160a installed in the reagent storage 160.

The first nozzle 21 and the second nozzle 22 are arranged in the moving direction in the horizontal direction. In this way the movable ranges of the first nozzle 21 and the second nozzle 22 can be overlapped in the moving direction, so that it is possible to reduce the area required for movement of the first nozzle 21 and the second nozzle 22 in plan view as compared with when the first nozzle 21 and the second nozzle 22 are arranged in a direction intersecting the moving direction. In this way it is possible to effectively downsize the sample measuring apparatus 100 in plan view.

Specifically, the first nozzle 21 and the second nozzle 22 are arranged along the X direction. The first nozzle 21 is disposed rearward (on the X2 direction side) relative to the second nozzle 22. The first nozzle 21 and the second nozzle 22 also are movable in the linear movable range 23. The movable range 23 includes a dispensable area of the first nozzle 21 and the second nozzle 22 and an area to retract to a position where it does not interfere with the container transport unit 140.

Among the first nozzle 21 and the second nozzle 22, the suctioning nozzle dispenses the suctioned liquid into the container 131. In this way it is possible to prepare a sample for detection by the measuring unit 10 by dispensing the suctioned liquid into the container 131. The second nozzle 22 dispenses the reagent contained in the reagent container 160a. In this way it is possible for the second nozzle 22 to suction the reagent from the reagent container 160a for dispensing.

In the movable range 23 of the first nozzle 21 and the second nozzle 22, the reagent supply units 161a and 161b, the spotting unit 180, the cleaning unit 171, and the sample supply unit 126 are arranged linearly in plan view as the suction position or discharge position of the first nozzle 21 in the order of the supply units 161a and 161b, the spotting unit 180, the cleaning unit 171, and the sample supply unit 126. That is, the sample supply unit 126, the cleaning unit 171, and the reagent supply units 161a and 161b are linearly arranged in the order of the sample supply unit 126, the cleaning unit 171, and the reagent supply units 161a and 161b in plan view. The sample supply unit 126, the cleaning unit 171, the spotting unit 180, and the reagent supply units 161a and 161b also are arranged linearly in plan view in the order of the sample supply unit 126, the cleaning unit 171, the spotting unit 180, and the reagent supply units 161a and 161b.

The first nozzle 21 and the second nozzle 22 are connected to a metering syringe 24, and suction and discharge a predetermined amount of a sample or a reagent. The second nozzle 22 is connected to a liquid level sensor. The liquid level sensor is connected to the control unit 11 and detects the liquid surface of the reagent based on the change in electrostatic capacitance due to the contact between the liquid surface of the reagent and the second nozzle 22 when suctioning the reagent from the reagent container 160a, and outputs the detection result to the control unit 11.

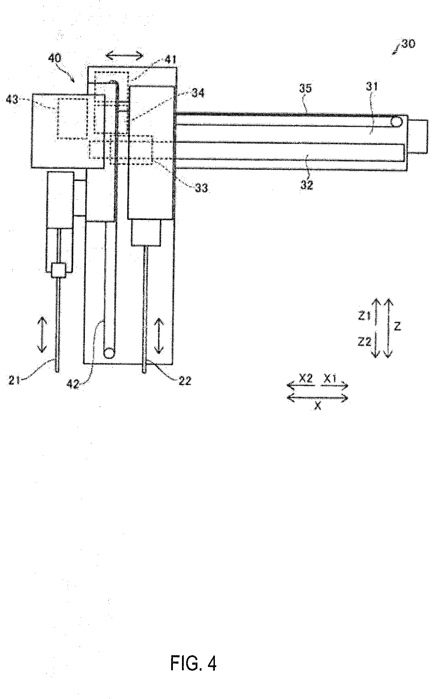

As shown in FIG. 4, the dispensing unit moving unit 30 moves the dispensing unit 20 in the direction in which the first nozzle 21 and the second nozzle 22 are arranged. That is, the dispensing unit moving unit 30 moves the dispensing unit 20 in the X direction in the horizontal direction. Specifically, the dispensing unit moving unit 30 is configured to integrally move the first nozzle 21 and the second nozzle 22 in a uniaxial direction (X direction) in the horizontal direction. In this way, it is possible to suppress an increase in the number of parts and to simplify the apparatus since the mechanism for moving the first nozzle 21 and the second nozzle 22 in the X direction in the horizontal direction can be shared.

The dispensing unit moving unit 30 includes a support unit 31, a rail 32, a moving unit 33, a motor 34, and a belt mechanism 35. The support unit 31 movably supports the first nozzle 21 and the second nozzle 22. The support unit 31 is provided in common to the first nozzle 21 and the second nozzle 22. In this way it is possible to suppress an increase in the number of parts, as compared to when members supporting the first nozzle 21 and the second nozzle 22 are provided separately. Note that the first nozzle 21 and the second nozzle 22 also may be separately supported. The first nozzle 21 and the second nozzle 22 also may be independently moved in a uniaxial direction.

The support unit 31 is formed in a plate shape extending along the XZ plane. The support unit 31 also is formed in an elongated shape extending along the X direction. Both the first nozzle 21 and the second nozzle 22 are disposed on one side surface (Y1 side surface) of the plate-shaped support unit 31. A rail 32 is provided on the support unit 31 so as to extend in the X direction. The moving unit 33 is engaged with the rail 32. The moving unit 33 is supported on the rail 32 so as to be movable in the X direction. That is, the moving unit 33 moves along the support unit 31. The first nozzle 21 and the second nozzle 22 are attached to a shared moving unit 33. In this way it is possible to suppress an increase in the number of parts, as compared to when the moving members to which the first nozzle 21 and the second nozzle 22 are attached are separately provided. The moving unit 33 is, for example, a slider that moves along the guide of the support unit 31.

The motor 34 is configured to drive the belt mechanism 35. The motor 34 is provided with an encoder, and a signal is transmitted from the encoder to the control unit 11. The motor 34 is driven under the control of the control unit 11 based on the signal of the encoder. The belt mechanism 35 includes a belt and a pulley and is connected to a dispensing unit 20 including a first nozzle 21 and a second nozzle 22. Due to the movement of the belt of the belt mechanism 35, the connected dispensing unit 20 is moved in the X direction.

The nozzle vertical movement unit 40 moves the first nozzle 21 and the second nozzle 22 independently of each other in the vertical direction. In this way the first nozzle 21 and the second nozzle 22 can independently suction and discharge the liquid. The nozzle vertical movement unit 40 includes a motor 41, a belt mechanism 42, a motor 43, and a belt mechanism 44.

The motor 41 and the belt mechanism 42 move the second nozzle 22 in the vertical direction. The motor 41 and the belt mechanism 42 are moved together with the second nozzle 22 in the uniaxial direction (X direction). The motor 41 is configured to drive the belt mechanism 42. The motor 41 is provided with an encoder, and a signal is transmitted from the encoder to the control unit 11. The motor 41 is driven under the control of the control unit 11 based on the signal of the encoder. The belt mechanism 42 includes a belt and a pulley, and is connected to the second nozzle 22. By the movement of the belt of the belt mechanism 42, the connected second nozzle 22 is moved in the vertical direction (Z direction).

The motor 43 and the belt mechanism 44 move the first nozzle 21 in the vertical direction. The motor 43 and the belt mechanism 44 also are moved together with the first nozzle 21 in the uniaxial direction (X direction). The motor 43 is configured to drive the belt mechanism 44. The motor 43 is provided with an encoder, and a signal is transmitted from the encoder to the control unit 11. The motor 43 is controlled under the control of the control unit 11 based on the signal of the encoder. The belt mechanism 44 includes a belt and a pulley, and is connected to the first nozzle 21. The connected first nozzle 21 is moved in the vertical direction (Z direction) by the movement of the belt of the belt mechanism 44.

During the measurement performed by the measuring unit 10, the control unit 11 controls the dispensing unit 20 and the dispensing unit moving unit 30 so as to dispense to another container 131. In this way it is possible to process other samples in parallel with the measurement by the measuring unit 10, so that the process of measuring the samples can be performed efficiently. While the container 131 into which the liquid has been dispensed is heated by the heating unit 150, the control unit 11 also controls the dispensing unit 20 and the dispensing unit moving unit 30. In this way other samples can be processed concurrently with the heating by the heating unit 150, so that the process of measuring the samples can be performed efficiently.

While the container 131 into which the liquid has been dispensed is subjected to the BF separation process by the BF separation unit 190, the control unit 11 also controls the dispensing unit 20 and the dispensing unit moving unit 30. In this way it is possible to efficiently perform the process of measuring the samples since other sample processing can be performed concurrently with the BF separation process by the BF separation unit 190.

### Dispensing of Samples

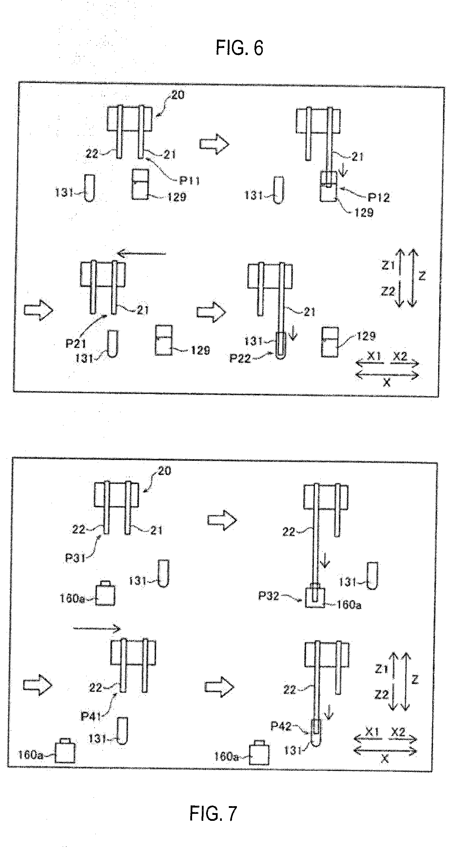

Dispensing of a sample by the dispensing unit 20 will be described referring to FIG. 6.

When suctioning a sample, the first nozzle 21 of the dispensing unit 20 is configured to be moved from the first position P11 to the sample suction position P12 after being moved to the first position P11. Specifically, the first nozzle 21 is horizontally moved to the first position P11 located above the sample suction position P12 by the dispensing unit moving unit 30. Then, the first nozzle 21 is moved from the first position P11 to the sample suction position P12 by the nozzle vertical moving unit 40. Then, the sample is suctioned by the first nozzle 21.

In discharging the suctioned sample, the first nozzle 21 of the dispensing unit 20 is configured to be moved from the second position P21 to the sample discharge position P22 after being moved to the second position P21. Specifically, the first nozzle 21 is horizontally moved by the dispensing unit moving unit 30 to the second position P21 located above the sample discharge position P22. Then, the first nozzle 21 is moved from the second position P21 to the sample dischargeposition P 22 by the nozzle vertical moving unit 40. Then, the sample is discharged by the first nozzle 21. In this way the sample is dispensed.

### Dispensing Reagent

Dispensing of the reagent by the dispensing unit 20 will be described with reference to FIG. 7.

When suctioning the reagent, the second nozzle 22 of the dispensing unit 20 is configured to be moved from the third position P31 to the reagent suction position P32 after being moved to the third position P31. Specifically, the second nozzle 22 is horizontally moved to the third position P31 located above the reagent suction position P32 by the dispensing unit moving unit 30. Then, the second nozzle 22 is moved from the third position P31 to the reagent suction position P32 by the nozzle vertical moving unit 40. Then, the reagent is suctioned by the second nozzle 22.

In discharging the suctioned reagent, the second nozzle 22 of the dispensing unit 20 is configured to be moved from the fourth position P41 to the reagent discharge position P42 after being moved to the fourth position P41. Specifically, the second nozzle 22 is horizontally moved by the dispensing unit moving unit 30 to a fourth position P 41 located above the reagent discharge position P42. Then, the second nozzle 22 is moved from the fourth position P41 to the reagent discharge position P42 by the nozzle vertical moving unit 40. Then, the reagent is discharged by the second nozzle 22. in this way the reagent is dispensed.

### High Pressure Cleaning

As shown in FIG. 8, the inside of the nozzle is cleaned by the cleaning unit 170 with a high-pressure cleaning liquid. Specifically, the cleaning liquid stored in the cleaning liquid container 173 is pressurized by the high pressure wash syringe 175 of the high pressure unit 172, and is sent to the nozzle via the metering syringe 24. In this way the cleaning liquid flowing in the nozzle becomes turbulent, and it is possible to effectively clean the interior of the nozzle. The Reynolds number of the cleaning liquid flowing in the nozzle is, for example, 4000 or more.

### Nozzle Tip Shape)

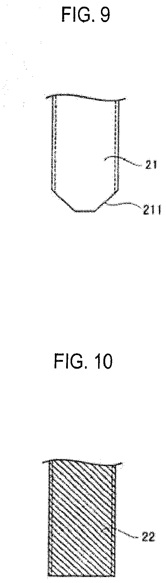

As shown in FIG. 9, the first nozzle 21 is formed so that its tip portion is inclined. In this way, when discharging a sample by pressing the first nozzle 21 against the container, it is possible to provide a gap between the inclined tip portion and the pressed portion, so as to prevent occlusion of the tip portion. In this way the sample can be reliably ejected. In the example shown in FIG. 9, two opposing parts of the tip portion of the first nozzle 21 are obliquely chamfered and inclined. That is, the first nozzle 21 has two inclined portions. Note that the tip portion of the first nozzle 21 may have one inclined portion or three or more inclined portions. The first nozzle 21 also is made of a metal material. The first nozzle 21 is made of, for example, stainless steel. In this way the mechanical strength of the first nozzle 21 can be easily secured.

As shown in FIG. 10, the outer surface of the second nozzle 22 is subjected to a water repellent process. In this way it is possible to prevent the reagent from adhering to the outer surface of the second nozzle 22 and prevent the reagent from dripping from the outer surface. Mixing of different kinds of reagents also can be prevented. In the second nozzle 22, the base material is formed of a metal material. For example, in the second nozzle 22, the base material is formed of stainless steel. For example, the outer surface of the second nozzle 22 may be coated with Teflon (registered trademark). Note that the second nozzle 22 may be subjected to a water repellent process other than Teflon.

### Spotting Process

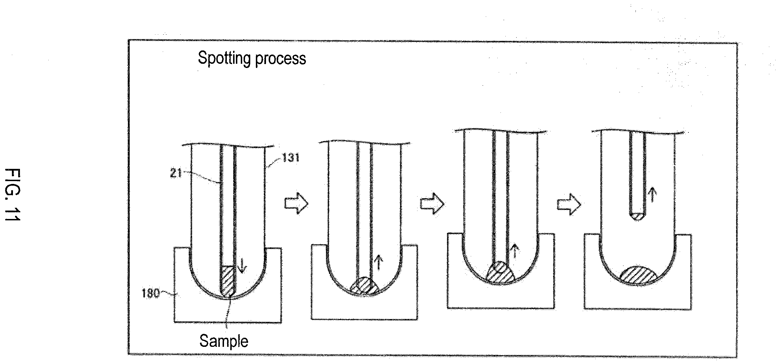

As shown in FIG. 11, the sample is transferred to the container 131 by spotting. A small amount of sample can be dispensed into the container 131 by transferring the sample by a spotting process. First, a bottom thrust is made to bring the first nozzle 21 into contact with the bottom of the container 131. At this time, the spotting unit 180 moves downward, and the pressing force on the container 131 by the first nozzle 21 is absorbed. Then, the sample is discharged from the first nozzle 21. At this time, since the sample comes into contact with the bottom of the container 131, the sample is adhered to the bottom surface of the container 131 due to the surface tension of the sample. Thereafter, the first nozzle 21 is raised and the discharge is completed. By performing the spotting process, it is possible to stably and slightly discharge the sample.

### Outline of Immunoassay

In the structural examples shown in FIGS. 2 to 11 described above, immunoassay is performed using R1 reagent to R5 reagent. Referring to FIG. 12, an example in which the test substance 81 is hepatitis B surface antigen (HBsAg) will be described as an example of immunoassay.

First, the sample containing the test substance 81 and the R1 reagent are dispensed to the container 131. The sample is dispensed into the container 131 by the first nozzle 21. The R1 reagent is dispensed into the container 131 by the second nozzle 22. The R1 reagent contains the capture substance 84 and reacts with and binds to the test substance 81. The capture substance 84 includes a binding substance for binding the capture substance 84 to the solid phase carrier 82 contained in the R2 reagent.

A combination of biotin and avidin, hapten and anti-hapten antibody, nickel and histidine tag, glutathione and glutathione-S-transferase and the like can be used for binding the binding substance and the solid phase carrier. Note that the meaning of "vidin" includes avidin and streptavidin.

For example, the capture substance 84 is an antibody modified with biotin (biotin antibody). That is, biotin is modified in the capture substance 84 as a binding substance. After dispensing the sample and the R1 reagent, the sample in the container 131 is heated to a predetermined temperature in the heating unit 150, whereby the capture substance 84 and the test substance 81 are combined.

Next, the R2 reagent is dispensed into the container 131 by the second nozzle 22. The R2 reagent contains a solid phase carrier 82. The solid phase carrier 82 binds to the binding substance of the capture substance 84. The solid phase carrier 82 is, for example, magnetic particles (StAvi-bound magnetic particles) to which streptavidin bound to biotin is immobilized. Streptavidin of StAvi-binding magnetic particles reacts with biotin as a binding substance and binds. After dispensing the R2 reagent, the sample inside the container 131 is heated to a predetermined temperature in the heating unit 150. As a result, the test substance 81 and the capture substance 84 are bonded to the solid phase carrier 82.

The test substance 81 and the capture substance 84 formed on the solid phase carrier 82 and the unreacted capture substance 84 are separated by the primary BF separation process performed by the BF separation unit 190. When the container 131 is set in the processing port of the BF separation unit 190, the BF separation unit 190 suctions the liquid phase by the cleaning unit 191 in the magnetic attraction state by the magnetic force source 192, discharges the cleaning liquid,and repeats execution of each step of mixing in a nonmagnetic attraction state one or more times. Unreacted components such as unreacted capture substance 84 are removed from the container 131 by the primary BF separation process. In the primary BF separation process, the process proceeds to the next step in a state in which the liquid phase in the container 131 is finally suctioned, and the processing proceeds to the next step.

Next, the second nozzle 22 dispenses the R3 reagent to the container 131. The R3 reagent contains the labeling substance 83 and reacts with and binds to the test substance 81. After dispensing the R3 reagent, the sample in the container 131 is heated to a predetermined temperature in the heating unit 150. As a result, an immunocomplex 85 including the test substance 81, the labeling substance 83, and the capture substance 84 is formed on the solid phase carrier 82. In the example of FIG. 12, the labeling substance 83 is an ALP (alkaline phosphatase) -labeled antibody.

The immunocomplex 85 formed on the solid phase carrier 82 and the unreacted labeling substance 83 are separated by a secondary BF separation process. The BF separation unit 190 executes each step of suction of the liquid phase in the magnetic attraction state by the magnetic force source 192, discharge of the cleaning liquid, and agitation in the non-magnetic attraction state one or more times. Unnecessary components such as unreacted labeling substance 83 are removed from the container 131 by the secondary BF separation process. In the secondary BF separation process, the liquid phase in the container 131 is finally suctioned and the process proceeds to the next step.

Thereafter, the R4 reagent and the R5 reagent are dispensed into the container 131 by the R4 reagent dispensing unit 163a and the R5 reagent dispensing unit 163b. The R4 reagent contains a buffer solution. The immunocomplex 85 bound to the solid phase carrier 82 is dispersed in the buffer solution. The R5 reagent contains a chemiluminescent substrate. The buffer contained in the R4 reagent has a composition that promotes a reaction between the label (enzyme) of the labeling substance 83 contained in the immunocomplex 85 and the substrate. After dispensing the R4 and R5 reagents, the sample inside the container 131 is heated to a predetermined temperature in the heating unit 150. Light is generated by causing the substrate to react with the label, and the intensity of the generated light is measured by the photodetector 10a of the measuring unit 10. The content of the test substance 81 in the sample or the like is measured based on the detection signal of the measuring unit 10.

### Description of Measuring Process Operation

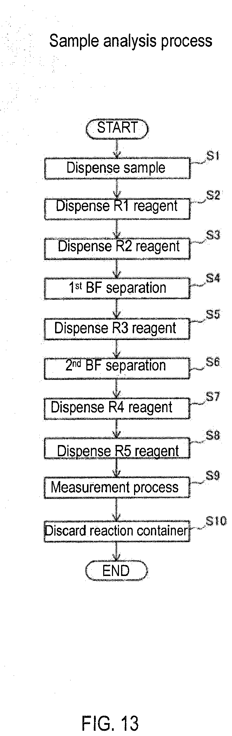

Next, the measuring process operation of the sample measuring apparatus 100 shown in FIG. 12 will be described with reference to FIG. 13. The process of each step shown in FIG. 13 is controlled by the control section 11 of the sample measuring apparatus 100.

In step S1, a sample is dispensed into the container 131. Specifically, the first nozzle 21 suctions the sample from the test tube of the sample supply unit 126 of the sample transport unit 120. Then, the sample suctioned by the first nozzle 21 is dispensed into the container 131. After dispensing, the first nozzle 21 is cleaned by the cleaning unit 171 using the cleaning liquid. The first nozzle 21 is cleaned by the cleaning unit 171 each time the dispensing operation is performed.

In step S2, the R1 reagent is dispensed into the container 131 by the second nozzle 22. Specifically, the R1 reagent is suctioned by the second nozzle 22 from the reagent container 160a held in the reagent storage 160. Then, the R1 reagent suctioned by the second nozzle 22 is dispensed into the container 131. After dispensing, the second nozzle 22 is cleaned by the cleaning unit 171 using the cleaning liquid. The second nozzle 22 is cleaned by the cleaning unit 171 each time the dispensing operation is performed.

In step S3, the R2 reagent is dispensed into the container 131 by the second nozzle 22. After dispensing the R2 reagent, the container 131 is transported to the heating unit 150 by the container transport unit 140. The container 131 is heated in the heating unit 150 for a predetermined time.

In step S4, the BF separation unit 190 executes the primary BF separation process. Specifically, the container 131 is transported to the BF separation unit 190 by the container transport unit 140. The BF separation unit 190 performs the primary BF separation process (see FIG. 12) on the sample in the container 131 to remove liquid components.

In step S5, the container 131 is transferred to the R3 reagent dispensing position by the container transport unit 140. Then, the second nozzle 22 dispenses the R3 reagent into the container 131. After dispensing the R3 reagent, the container 131 is transferred to the heating unit 150 by the container transport unit 140. The container 131 is heated in the heating unit 150 for a predetermined time.

In step S6, the secondary BF separation process is executed by the BF separation unit 190. Specifically, the container 131 is transported to the BF separation unit 190 by the container transport unit 140. The BF separation unit 190 performs the secondary BF separation process (see FIG. 12) on the sample in the container 131 to remove liquid components.

In step S7, the R4 reagent is dispensed into the container 131. Specifically, the container 131 is transferred to the R4 reagent dispensing position by the container transport unit 140. The R4 reagent is dispensed to the container 131 by the R4 reagent dispensing unit 163a.

In step S8, the R5 reagent is dispensed into the container 131. Specifically, the container 131 is transferred to the R5 reagent dispensing position by the container transport unit 140. The R5 reagent is dispensed into the container 131 by the R5 reagent dispensing unit 163b. After dispensing the R5 reagent, the container 131 is transferred to the heating unit 150 by the container transport unit 140. The container 131 is heated in the heating unit 150 for a predetermined time.

In step S9, detection process of the immunocomplex 85 is performed. Specifically, the container 131 is transferred to the measuring unit 10 by the container transport unit 140. The measurement unit 10 measures the intensity of light generated by reacting a substrate with a label. The detection result of the measurement unit 10 is output to the control unit 11.

After completion of the detection, in a step S10 the transport unit 125 removes the container 131 subjected to the measurement process from the measuring unit 10 and discards the used container 131 to the disposal port 128.

The measurement process operation by the sample measuring apparatus 100 is performed as described above.

Note that the embodiments disclosed herein are examples in all respects and are not restrictive. The scope of the present invention is indicated not by the description of the above embodiments but by the scope of the claims, and includes meanings equivalent to the claims and all changes within the scope.

### EXPLANATION OF REFERENCE NUMBERS

10: measuring unit; 11: control unit; 20: dispensing unit; 21: first nozzle; 22: second nozzle; 30: dispensing unit moving unit; 31: support unit; 33: moving unit; 40: nozzle vertical moving unit; 100: sample measuring apparatus; 125: transport unit; 126: sample supply unit; 129: sample container; 131: container; 140: container transport unit, 145: guide, 150: heating unit, 160: reagent storage; 160a: reagent container; 160b: reagent table; 161a, 161 b: reagent supply unit; 171: cleaning unit; 180: spotting unit; 190: BF separation unit; P1: suction position; P2: discharge position; P3: suction position; P4: discharge position.

Further disclosure is given in the following numbered paragraphs:
1. A sample measuring apparatus comprising:
   a dispensing unit integrally holding a first nozzle and a second nozzle;
   a dispensing unit moving unit for moving the dispensing unit;
   a control unit for controlling the dispensing unit and the dispensing unit moving unit so that a first liquid is dispensed into a container using the first nozzle and a second liquid is dispensed to the container using the second nozzle;
   a measuring unit that measures a sample to which the first liquid and the second liquid have been dispensed and processed.
2. The sample measuring apparatus according to para. 1, wherein
   the dispensing unit moving unit moves the dispensing unit in a direction in which the first nozzle and the second nozzle are arranged.
3. The sample measuring apparatus according to para. 1 or 2, further comprising:
   a container transporting unit that conveys the container along a movement direction of the dispensing unit.
4. The sample measuring apparatus according to para. 3, wherein
   the container transporting unit has a guide extending in a direction in which the first nozzle and the second nozzle are arranged, and conveys the container in the direction in which the first nozzle and the second nozzle are arranged.
5. The sample measuring apparatus according to any one of paras. 1 to 3, further comprising:
   a sample supply unit to which a sample is supplied as the first liquid;
   a reagent storage having a reagent supply unit for supplying reagent as the second liquid;
   a cleaning unit that cleans the nozzle, among the first nozzle and the second nozzle, that has suctioned the liquid with the cleaning liquid each time a liquid is suctioned;
   wherein the sample supply unit, the washing unit, and the reagent supply unit are linearly arranged in the order of the sample supply unit, the washing unit, and the reagent supply unit are arranged linearly in the stated order in plan view.
6. The sample measuring apparatus according to para. 5, further comprising:
   a spotting unit that holds a container so as to be movable in a vertical direction, and spots a sample as the first liquid by the first nozzle;
   wherein the sample supply unit, the cleaning unit, the spotting unit, and the reagent supply unit are linearly arranged in the order of the sample supply unit, the washing unit, the spotting unit, and the reagent supply unit in plan view.
7. The sample measuring apparatus according to any one of paras. 1 to 6, wherein
   the first nozzle and the second nozzle dispense mutually different types of liquids.
8. The sample measuring apparatus according to any one of paras. 1 to 7, wherein
   the control unit controls the dispensing unit and the dispensing unit moving unit so as to perform dispensing to another container while measurement is performed by the measuring unit.
9. The sample measuring apparatus according to any one of paras. 1 to 8, further comprising:
   a heating unit for heating the container into which the liquid has been dispensed;
   wherein the measuring unit measures the sample heated by the heating unit.
10. The sample measuring apparatus according to para. 9, wherein
   the control unit controls the dispensing unit and the dispensing unit moving unit so as to dispense to another container while the container into which the liquid has been dispensed is heated by the heating unit.
11. The sample measuring apparatus according to any one of paras. 1 to 10, further comprising:
   a BF separation unit that performs BF separation on the container into which the liquid has been dispensed;
   wherein the measuring unit measures the sample subjected to BF separation process by the BF separation unit.
12. The sample measuring apparatus according to para. 11, wherein
   the control unit controls the dispensing unit and the dispensing unit moving unit so that dispensing is performed on another container while the container into which the liquid has been dispensed is subjected to the BF separation process by the BF separation unit.
13. The sample measuring apparatus according to any one of paras. 1 to 14, in which the dispensing unit holds the first nozzle at a first side in a predetermined direction and holds the second nozzle at a second side opposite to the first side in the predetermined direction, further comprising:
   a reagent storage disposed in the second side of the sample measuring apparatus, and which has an installed reagent container accommodating a reagent to be dispensed by the dispensing unit;
   wherein the second nozzle suctions a reagent from the reagent container installed in the reagent storage.
14. The sample measuring apparatus according to para. 13, wherein
   the reagent storage includes a reagent table for installation of a reagent by a user.
15. The sample measuring apparatus according to any one of paras. 1 to 14, in which the dispensing unit holds the first nozzle at a first side in a predetermined direction and holds the second nozzle at a second side opposite to the first side in the predetermined direction, further comprising:
   a transport unit that is disposed on the first side of the sample measuring apparatus and conveys a sample container containing a sample;
   wherein the first nozzle suctions a sample from a sample container that contains the sample transported by the transporting unit.
16. The sample measuring apparatus according to any one of paras. 1 to 15, wherein
   the dispensing unit moving unit includes a common support unit that movably supports the first nozzle and the second nozzle.
17. The sample measuring apparatus according to para. 16, wherein
   the dispensing unit moving unit further comprises a moving unit that moves along the support unit;
   the first nozzle and the second nozzle are attached to a common moving unit..
18. The sample measuring apparatus according to any one of paras. 1 to 17, wherein
   the suction position by the first nozzle, the dispensing position by the first nozzle, the suction position by the second nozzle, and the dispensing position of the second nozzle are set in a direction in which the first nozzle and the second nozzle are arranged.
19. The sample measuring apparatus according to para. 18, wherein
   the suction position of the first nozzle, the dispensing position of the first nozzle, the suction position of the second nozzle, and the dispensing position of the second nozzle are linearly arranged in plan view.
20. The sample measuring apparatus according to any one of paras. 1 to 19, further comprising:
   a nozzle vertical moving unit that moves the first nozzle and the second nozzle mutually independently in a vertical direction.
21. The sample measuring apparatus according to any one of paras. 1 to 20, further comprising:
   a cleaning unit that washes a nozzle that has suctioned a liquid among the first nozzle and the second nozzle with a washing liquid each time a liquid is suctioned.
22. The sample measuring apparatus according to para. 21, wherein
   the control unit controls the cleaning unit so as to discharge a washing liquid from a nozzle that has suctioned a liquid after the liquid suctioned by the nozzle has been dispensed into a container.
23. The sample measuring apparatus according to para. 21 or 22, wherein
   the cleaning unit is provided in common to the first nozzle and the second nozzle.
24. The sample measuring apparatus according to any one of paras. 21 to 23, wherein
   the cleaning unit is disposed below the dispensing unit moving unit.
25. The sample measuring apparatus according to any one of paras. 1 to 24, wherein
   the first nozzle is configured to suction a sample; and
   the second nozzle is configured to suction a reagent.
26. The sample measuring apparatus according to any one of paras. 1 to 25, wherein
   the suctioning nozzle among the first nozzle and the second nozzle is configured to discharge the suctioned liquid into a container.
27. The sample measuring apparatus according to any one of paras. 1 to 26, wherein
   an outer surface of the second nozzle for dispensing a reagent as the second liquid is subjected to a water repellent process.
28. The sample measuring apparatus according to any one of paras. 1 to 27, wherein
   the first nozzle for dispensing the sample as the first liquid is formed so that a tip portion thereof is inclined.
29. A sample measuring method comprising the steps of:
   moving a dispensing unit integrally holding a first nozzle and a second nozzle;
   dispensing a first liquid using the first nozzle;
   dispensing a second liquid using the second nozzle;
   measuring a sample that has been processed by dispensing the first liquid and the second liquid.

## Claims

1. A sample measuring apparatus comprising:
a dispensing unit integrally holding a first nozzle and a second nozzle;
a dispensing unit moving unit for moving the dispensing unit;
a control unit for controlling the dispensing unit and the dispensing unit moving unit so that a first liquid is dispensed into a container using the first nozzle and a second liquid is dispensed to the container using the second nozzle;
a measuring unit that measures a sample to which the first liquid and the second liquid have been dispensed and processed.

2. The sample measuring apparatus according to claim 1, wherein
the dispensing unit moving unit moves the dispensing unit in a direction in which the first nozzle and the second nozzle are arranged.

3. The sample measuring apparatus according to claim 1 or 2, further comprising:
a container transporting unit that conveys the container along a movement direction of the dispensing unit.

4. The sample measuring apparatus according to claim 3, wherein
the container transporting unit has a guide extending in a direction in which the first nozzle and the second nozzle are arranged, and conveys the container in the direction in which the first nozzle and the second nozzle are arranged.

5. The sample measuring apparatus according to any one of claims 1 to 3, further comprising:
a sample supply unit to which a sample is supplied as the first liquid;
a reagent storage having a reagent supply unit for supplying reagent as the second liquid;
a cleaning unit that cleans the nozzle, among the first nozzle and the second nozzle, that has suctioned the liquid with the cleaning liquid each time a liquid is suctioned;
wherein the sample supply unit, the washing unit, and the reagent supply unit are linearly arranged in the order of the sample supply unit, the washing unit, and the reagent supply unit are arranged linearly in the stated order in plan view.

6. The sample measuring apparatus according to claim 5, further comprising:
a spotting unit that holds a container so as to be movable in a vertical direction, and spots a sample as the first liquid by the first nozzle;
wherein the sample supply unit, the cleaning unit, the spotting unit, and the reagent supply unit are linearly arranged in the order of the sample supply unit, the washing unit, the spotting unit, and the reagent supply unit in plan view.

7. The sample measuring apparatus according to any one of claims 1 to 6, wherein
the first nozzle and the second nozzle dispense mutually different types of liquids.

8. The sample measuring apparatus according to any one of claims 1 to 7, wherein
the control unit controls the dispensing unit and the dispensing unit moving unit so as to perform dispensing to another container while measurement is performed by the measuring unit.

9. The sample measuring apparatus according to any one of claims 1 to 8, further comprising:
a heating unit for heating the container into which the liquid has been dispensed;
wherein the measuring unit measures the sample heated by the heating unit.

10. The sample measuring apparatus according to claim 9, wherein
the control unit controls the dispensing unit and the dispensing unit moving unit so as to dispense to another container while the container into which the liquid has been dispensed is heated by the heating unit.

11. The sample measuring apparatus according to any one of claims 1 to 10, further comprising:
a BF separation unit that performs BF separation on the container into which the liquid has been dispensed;
wherein the measuring unit measures the sample subjected to BF separation process by the BF separation unit.

12. The sample measuring apparatus according to claim 11, wherein
the control unit controls the dispensing unit and the dispensing unit moving unit so that dispensing is performed on another container while the container into which the liquid has been dispensed is subjected to the BF separation process by the BF separation unit.

13. The sample measuring apparatus according to any one of claims 1 to 14, in which the dispensing unit holds the first nozzle at a first side in a predetermined direction and holds the second nozzle at a second side opposite to the first side in the predetermined direction, further comprising:
a reagent storage disposed in the second side of the sample measuring apparatus, and which has an installed reagent container accommodating a reagent to be dispensed by the dispensing unit;
wherein the second nozzle suctions a reagent from the reagent container installed in the reagent storage.

14. The sample measuring apparatus according to claim 13, wherein
the reagent storage includes a reagent table for installation of a reagent by a user.

15. A sample measuring method comprising the steps of:
moving a dispensing unit integrally holding a first nozzle and a second nozzle;
dispensing a first liquid using the first nozzle;
dispensing a second liquid using the second nozzle;
measuring a sample that has been processed by dispensing the first liquid and the second liquid.
